# EUROPÄISCHE PATENTSCHRIFT

(11) **EP 1 302 140 B1**
(45) Veröffentlichungstag und Bekanntmachung des Hinweises auf die Patenterteilung: **26.10.2005**
(21) Anmeldenummer: 02405814.1
(22) Anmeldetag: 20.09.2002
(51) Int. Cl.: A47J 31/54, A47J 31/36, A47J 31/46

(54) **Verfahren zur Herstellung von Heissgetränken sowie Vorrichtung zur Durchführung des Verfahrens**
Method for preparing hot beverages and device for carrying out said method
Procédé de préparation de boissons chaudes et dispositif pour la mise en oeuvre du procédé

(30) Priorität: 09.10.2001 CH 19262001; 23.04.2002 CH 6892002
(43) Veröffentlichungstag der Anmeldung: 16.04.2003
(73) Patentinhaber: Saeco IPR Limited, Dublin 12 (IE)
(72) Erfinder: Bitar, Nicola, 9463 Oberriet / SG (CH); Turi, Mariano, 8046 Zürich (CH)
(74) Vertreter: Rottmann, Maximilian

(56) Entgegenhaltungen:
- EP-A- 0 676 163
- EP-A- 0 812 559
- EP-A- 0 934 719
- WO-A-99/22629
- US-A- 4 287 817
- US-A- 5 858 437

## Beschreibung

Die Erfindung betrifft ein Verfahren zur Herstellung von Heissgetränken gemäss dem Oberbegriff des Anspruchs 1 sowie eine Vorrichtung zur Durchführung des Verfahrens gemäss dem Oberbegriff des Anspruchs 7.

Verfahren zur Herstellung von Heissgetränken durch Aufbrühen einer partikelförmigen, mittels Wasser extrahierbaren Substanz sind in verschiedensten Formen bekannt. Diesbezüglich seien beispielsweise Espressokaffeemaschinen erwähnt, bei denen gemahlenes Kaffeepulver einer Brühkammer zugeführt wird. Das Kaffeepulver wird in der Brühkammer verdichtet und danach vom Brühwasser unter Druck durchströmt und extrahiert.

Bei herkömmlichen Kaffeemaschinen wird das in der Brühkammer aufgenommene Kaffeepulver von Brühwasser durchströmt, das eine Temperatur zwischen ca. 85-98°C aufweist. Das Kaffeepulver wird bei praktisch allen bekannten Espressokaffeemaschinen vom Brühwasser mit einer Temperatur von unter 100°C durchströmt, da die einhellige Meinung vorherrscht, dass bei Temperaturen von 100°C oder darüber Bitterstoffe aus dem Kaffeepulver ausgelöst werden, die den Geschmack des Kaffees letztlich nachteilig beeinträchtigen.

Aus der EP 0 592 943 ist eine Haushaltespressomaschine bekannt, die einen Kessel zur Aufnahme von Frischwasser, eine darunter angeordnete Heizeinrichtung, eine Förderpumpe zum Förden des heissen Brühwassers und eine Brühkammer zur Aufnahme des Kaffeemehls aufweist. Das im Kessel aufgenommene Wasser wird auf eine Temperatur von 93°C bis 97°C aufgeheizt. Dieses erhitzte Wasser wird von der Förderpumpe zu der Brühkammer gefördert, wo es das Kaffeemehl mit der angestrebten Temperatur von 93°C bis 97°C durchströmt, um danach als fertiges Kaffeegetränk in ein Gefäss einzufliessen.

In der US 4 287 817 ist eine herkömmliche Filterkaffeemaschine mit einem Filterkorb bzw. einer Aufbrüheinrichtung zum weitgehend drucklosen Aufbrühen des Kaffeepulvers offenbart. Die Kaffeemaschine ist mit einem Boiler versehen, der eine vom Boden wegführende Heisswasserleitung sowie eine vom oberen Teil wegführende Dampfleitung aufweist, welche letztere in einen separaten Dampfauslass mündet. Die Besonderheit dieser Kaffeemaschine wird darin gesehen, dass der Boiler sowohl Heisswasser wie auch Dampf erzeugen kann. In der Beschreibungseinleitung dieses Dokuments wird zudem darauf hingewiesen, dass Kaffeemaschinen bekannt sind, bei denen das Kaffeepulver mit Dampf oder Brühwasser in Berührung kommt, das über den normalen Siedepunkt hinaus erhitzt wurde. Bezüglich der Brühwassertemperatur, die das Brühwasser während des Durchströmens des Kaffeepulvers aufweist, lassen sich dieser Druckschrift jedoch keine näheren Hinweise entnehmen.

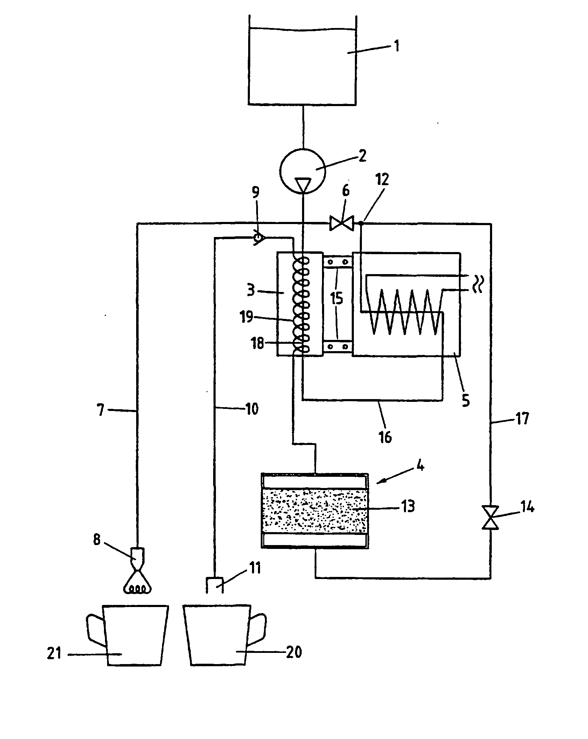

Die EP 0 812 559 zeigt eine Kaffeemaschine, bei der oberhalb der eigentlichen Brühkammer ein Druckkolben angeordnet ist, mittels welchem das Brühwasser zum Aufbrühen des Kaffeepulvers gezielt unter Überdruck gesetzt werden kann. Zwischen der Brühkammer und dem Druckkolben ist ein Kontrollventil angeordnet, welches dazu dient, den Brühvorgang in Intervallen durchzuführen, indem in einem ersten Schritt das Kaffeepulver benetzt und in einem zweiten und dritten Schritt das Kaffeepulver extrahiert wird. Obwohl davon gesprochen wird, dass das Brühwasser auf eine erhöhte Temperatur gebracht wird, ist nicht davon die Rede, dass das Brühwasser über den normalen Siedepunkt hinaus erhitzt wird. Die Fig. 2 dieser Druckschrift zeigt eine nach dem Stand der Technik ausgebildete Brüheinrichtung. Diese weist einen ersten Wassererhitzer und einen zweiten Zusatzerhitzer mit geringer Kapazität auf. Dieser Zusatzerhitzer kann eine geringe Wassermenge auf eine Temperatur von 180°C erhitzen. Aus der zugehörigen Beschreibung ergibt sich, dass diese geringe, auf 180°C erhitzte Wassermenge dazu vorgesehen ist, das in der Brühkammer aufgenommene Kaffeepulver mit einem Gemisch aus Wasser und Dampf in einem ersten Schritt zu benetzen. Zu dem eigentlichen Aufbrühvorgang lassen sich auch dieser Schrift keine näheren Hinweise entnehmen.

Schliesslich ist aus der EP 0 934 719 eine herkömmliche Kaffeemaschine mit einem manuell einsetzbaren Filterträger bekannt. Der grundlegende Erfindungsgedanke wird darin gesehen, dass in einer ersten Vorbrüh-Phase der Überdruck des auf 120°C erhitzten Wassers dazu genutzt wird, eine geringe Menge an Brühwasser in das Kaffeepulver einzuleiten und dieses zu benetzen. Nach einer Zeitspanne von 2-8 Sekunden wird ein Ventil geöffnet, so dass das von der Pumpe geförderte Frischwasser durch einen Durchlauferhitzer strömen kann, in welchem es erhitzt wird um danach das im Filterhalter aufgenommene Kaffeepulver zu extrahieren. Zu der Temperatur, mit der das Brühwasser das im Filterhalter aufgenommene Kaffeepulver aufbrüht, werden auch in dieser Schrift keine näheren Angaben gemacht.

Es lässt sich jedoch generell festhalten, dass bei sämtlichen der vorgängig angeführten Kaffeemaschinen das Kaffeepulver von Brühwasser durchströmt und extrahiert wird, das eine Temperatur aufweist, die unterhalb des normalen Siedepunkts liegt.

Ausgehend vom genannten Stand der Technik besteht die Aufgabe der Erfindung darin, ein Verfahren zur Herstellung von Heissgetränken gemäss dem Oberbegriff des Anspruchs 1 vorzuschlagen, bei welchem das Getränkepulver, insbesondere das Kaffeepulver, besser extrahiert wird.

Diese Aufgabe wird durch die im Kennzeichen des Anspruchs 1 angeführten Verfahrensschritte gelöst.

Überraschenderweise hat sich gezeigt, dass das aufgebrühte Getränk geschmacklich nicht beeinträchtigt wird, auch wenn das in der Brühkammer aufgenommene Getränkepulver von Brühwasser durchströmt wird, welches auf eine Temperatur oberhalb des normalen Siedepunkts erhitzt wurde, sich dabei aber immer in flüssigem Aggregatszustand befindet. Das nachfolgende Abkühlen ist notwendig, damit sich der Benutzer nicht verbrüht und das Getränk in flüssiger und nicht in dampfförmiger Form austritt. Es versteht sich, dass die Extraktion des Getränkepulvers sehr gut ist, wenn letzteres von Brühwasser mit einer Temperatur oberhalb des Siedepunktes durchströmt wird.

Auch wenn bei einigen der nach dem Stand der Technik ausgebildeten Kaffeemaschinen davon die Rede ist, das in der Brühkammer aufgenommene Kaffeepulver mittels Dampf oder auf über 100°C erhitztem Brühwasser zu benetzen, so wurden bei keiner der genannten Kaffeemaschinen Massnahmen getroffen, die es erlauben würden, das in der Brühkammer aufgenommene Kaffeepulver von dem über den normalen Siedepunkt hinaus erhitzten Brühwasser im flüssigen Aggregatszustand zu durchströmen und zu extrahieren. Dazu müsste nach der Brühkammer sowohl ein Überdruckventil wie auch ein Wärmetauscher vorgesehen werden. Ist dies nicht der Fall, so tritt nicht ein flüssiges Getränk sondern Dampf aus dem Kaffeeauslass aus.

Bevorzugte Verfahren werden in den abhängigen Ansprüchen 2 bis 6 näher umschrieben.

Im Anspruch 7 wird zudem eine Vorrichtung zur Durchführung des Verfahrens beansprucht. Bevorzugte Ausführungsbeispiele der Vorrichtung sind in den abhängigen Ansprüchen 8 bis 13 näher umschrieben.

Die Erfindung wird nachfolgend anhand einer Zeichnung näher erläutert.

Aus der einzigen Zeichnung geht eine schematisch dargestellte Vorrichtung zur Herstellung von Heissgetränken durch Aufbrühen einer partikelförmigen, mittels Wasser extrahierbaren Substanz hervor. Diese Vorrichtung weist einen Frischwassertank 1, eine Förderpumpe 2, einen Wärmetauscher 3, eine Brühkammer 4, einen Wassererhitzer 5, eine Dampfleitung 7 mit einem Dampf-Ventil 6 und einem Dampfauslass 8, eine Getränkeleitung 10 mit einem Rückschlagventil 9 und einem Getränkeauslass 11 sowie einem Brühwasserleitung 17 mit einem Brühwasser-Ventil 14 auf.

Die Funktionsweise dieser Vorrichtung bei der Getränkeerzeugung stellt sich wie folgt dar (Dampf-Ventil 6 geschlossen, Brühwasser-Ventil 14 geöffnet): Mittels der Pumpe 2 wird frisches Wasser vom Frischwassertank 1 gefördert. Dieses kalte Wasser durchströmt über den Kaltwasserdurchlauf 18 zuerst den Wärmetauscher 3, um danach über eine Leitung 16 in den Wassererhitzer 5 zu gelangen, in welchem es auf eine Temperatur oberhalb des normalen Siedepunkts erhitzt wird. Unter normalem Siedepunkt ist der Siedepunkt des Wassers bei normalem Luftdruck (1013 hPa auf Meereshöhe) zu verstehen. Das Wasser wird im Wassererhitzer 5 bevorzugterweise auf eine Temperatur zwischen ca. 110°C und 130°C erhitzt. Durch das Rückschlagventil 9, welches gleichzeitig als Überdruckventil wirkt, wird sichergestellt, dass das Brühwasser immer den flüssigen Aggregatszustand beibehält, auch wenn es auf eine Temperatur oberhalb des normalen Siedepunkts erhitzt wird. Vom Wassererhitzer 5 strömt das heisse Brühwasser über eine Brühwasserleitung 17 zu der Brühkammer 4, wo es die darin aufgenommene Substanz 13 durchströmt und dabei extrahiert. Das aufgebrühte Getränk durchströmt danach über den Heisswasserdurchlauf 19 den vom Frischwasser gekühlten Wärmetauscher 3, in welchem es auf eine Temperatur unterhalb des normalen Siedepunkts abgekühlt wird. Vom Wärmetauscher 3 strömt das Getränk über das Rückschlagventil 9 und die Getränkeleitung 10 zu dem Getränkeauslass 11, wo es in ein bereitgestelltes Getränkegefäss 20 einfliesst.

Wie aus der Darstellung ersichtlich ist, ist der Wärmetauscher 3 über Verbindungselemente 15 mit dem Wassererhitzer 5 verbunden. Diese Verbindungselemente 15 sind dazu da, den Wärmetauscher 3 auf eine bestimmte Temperatur vorzuheizen. Dadurch kann der beim Aufbrühen eines ersten Getränks durch die Vielzahl von zu erwärmenden Elementen wie Leitungen 10, 17, Brühkammer 4, Überdruckventil 9 etc. entstehende Wärmeverlust kompensiert werden. Werden mehrere Getränke nacheinander aufgebrüht, so sind die genannten Elemente schon vorgewärmt und der Wärmeverlust ist entsprechend geringer. Die Wärmekopplung zwischen dem Wärmetauscher 3 und dem Wassererhitzer 5 trägt diesem Umstand Rechnung.

Die Dampfleitung 7 ist über ein T-förmiges Abzweigstück 12 mit dem Ausgang des Wassererhitzers 5 verbunden. Um Dampf zu erzeugen, wird das in der Brühwasserleitung 17 angeordnete Brühwasser-Ventil 14 geschlossen und das in der Dampfleitung angeordnete Dampf-Ventil 6 geöffnet, so dass das über den normalen Siedepunkt hinaus erhitzte Wasser über die Dampfleitung 7 und den Dampfauslass 8 austreten kann. Da in der Leitung 7 kein Rückschlagventil bzw. Überdruckventil angeordnet ist, nimmt das über den normalen Siedepunkt hinaus erhitzte Wasser in der Dampfleitung den gasförmigen Aggregatszustand ein und tritt als Dampf aus. Mit diesem Dampf kann beispielsweise die in einer Tasse 21 aufgenommene Flüssigkeit erwärmt werden.

Indem die in der Brühkammer aufgenommene Substanz von Brühwasser durchströmt wird, welches über den normalen Siedepunkt hinaus erhitzt wurde, sich dabei aber immer noch im flüssigen Aggregatszustand befindet, wird eine wesentlich bessere Extraktion der Substanz erreicht, ohne dass die bisher üblichen Nachteile wie beispielsweise das Auslösen von Bitterstoffen aus dem Kaffeepulver in Kauf genommen werden müssen. Dadurch kann, im Vergleich mit herkömmlichen Kaffeemaschinen, mit einer geringeren Menge an Kaffeepulver ein Kaffeegetränk von zumindest gleicher Qualität hergestellt werden. Da das Wasser im Wassererhitzer immer über den normalen Siedepunkt hinaus erhitzt wird, steht bei Bedarf auch immer sofort Dampf zur Verfügung.

Die vorliegende Vorrichtung zur Herstellung von Heissgetränken eignet sich insbesondere zur Herstellung von Espressokaffee. Allerdings können natürlich auch andere Heissgetränke wie beispielsweise Tee, Schokolade, Suppen etc. damit hergestellt werden.

## Patentansprüche

1. Verfahren zur Herstellung von Heissgetränken, insbesondere von Espressokaffee, durch Aufbrühen einer partikelförmigen, mittels Wasser extrahierbaren Substanz, welche einer Brühkammer zugeführt und darin vom Brühwasser unter Druck durchströmt und extrahiert wird, **dadurch gekennzeichnet, dass** das der Brühkammer (4) zuzuführende Brühwasser auf eine Temperatur oberhalb des normalen Siedepunkts erhitzt und die in der Brühkammer (4) aufgenommene Substanz (13) von dem über den normalen Siedepunkt hinaus erhitzten Brühwasser durchströmt und extrahiert wird, wobei das Brühwasser immer den flüssigen Aggregatszustand beibehält und dass das aufgebrühte Getränk danach vor dem Austritt aus dem Getränkeauslass (11) auf eine Temperatur unterhalb des normalen Siedepunkts abgekühlt wird.

2. Verfahren nach Anspruch 1, **dadurch gekennzeichnet, dass** das der Brühkammer (4) zuzuführende Brühwasser auf eine Temperatur von über 100°C erhitzt und das aufgebrühte Getränk danach auf eine Temperatur von unter 100°C abgekühlt wird.

3. Verfahren nach Anspruch 1 oder 2, **dadurch gekennzeichnet, dass** das über den normalen Siedepunkt hinaus erhitzte Brühwasser unter Überdruck gehalten wird, so dass es den flüssigen Aggregatszustand beibehält.

4. Verfahren nach einem der vorhergehenden Ansprüche, **dadurch gekennzeichnet, dass** das der Brühkammer (4) zuzuführende Brühwasser auf eine Temperatur zwischen 110°C und 130°C erhitzt wird.

5. Verfahren nach einem der vorhergehenden Ansprüche, **dadurch gekennzeichnet, dass** das aufgebrühte Getränk in einem Wärmetauscher (3) auf eine Temperatur unterhalb des normalen Siedepunkts bzw. unter 100°C abgekühlt wird.

6. Verfahren nach Anspruch 5, **dadurch gekennzeichnet, dass** der Wärmetauscher (3) vom noch nicht erhitzten Brühwasser durchströmt und gekühlt wird.

7. Vorrichtung zur Durchführung des Verfahrens nach Anspruch 1, mit einer Frischwasserquelle (1), einer Förderpumpe (2), einem Wassererhitzer (5), einer Brühkammer (4) sowie einem Getränkeauslass (11), **dadurch gekennzeichnet, dass** das Brühwasser im Wassererhitzer (5) über den normalen Siedepunkt hinaus erhitzt wird, wobei zwischen dem Wassererhitzer (5) und dem Getränkeauslass (11) Mittel (9) zur Erhöhung des Drucks des Brühwassers angeordnet sind, so dass das über den normalen Siedepunkt hinaus erhitzte Brühwasser den flüssigen Aggregatszustand beibehält und dass zwischen der Brühkammer (4) und dem Getränkeauslass (11) ein Wärmetauscher (3) zum Abkühlen des aufgebrühten Getränks auf eine Temperatur unterhalb des normalen Siedepunkts angeordnet ist.

8. Vorrichtung nach Anspruch 7, **dadurch gekennzeichnet, dass** der Wärmetauscher (3) einen Kaltwasserdurchlauf (18) und einen Heisswasserdurchlauf (19) aufweist, wobei der Einlass des Kaltwasserdurchlaufs (18) mit der Frischwasserquelle (1) und der Auslass mit dem Wassererhitzer (5) verbunden ist.

9. Vorrichtung nach Anspruch 8, **dadurch gekennzeichnet, dass** der Einlass des Heisswasserdurchlaufs (19) des Wärmetauschers (3) mit der Brühkammer (4) und der Auslass mit dem Getränkeauslass (11) verbunden ist.

10. Vorrichtung nach einem der Ansprüche 7 bis 9, **dadurch gekennzeichnet, dass** zwischen dem Wassererhitzer (5) und der Brühkammer (4) eine mittels eines Ventils (6) verschliessbare Dampfleitung (7) zur Entnahme von Dampf abzweigt.

11. Vorrichtung nach einem der Ansprüche 7 bis 10, **dadurch gekennzeichnet, dass** in der Brühwasserleitung (17) ein Ventil (14) angeordnet ist.

12. Vorrichtung nach einem der Ansprüche 7 bis 11, **dadurch gekennzeichnet, dass** in der Getränkeleitung (10) ein Überdruckventil (9) angeordnet ist, welches derart ausgelegt ist, dass das über den normalen Siedepunkt hinaus erhitzte Brühwasser den flüssigen Aggregatszustand beibehält.

13. Vorrichtung nach einem der Ansprüche 7 bis 12, **dadurch gekennzeichnet, dass** der Wärmetauscher (3) mit dem Wassererhitzer (5) thermisch verbunden ist.

## Claims

1. Method for preparing hot beverages, in particular espresso coffee, by brewing a particulate substance which can be extracted by means of water and is supplied to a brewing chamber in which brewing water flows through the substance under pressure and the substance is extracted, **characterized in that** the brewing water which is to be supplied to the brewing chamber (4) is heated to a temperature above the normal boiling point, and the brewing water heated beyond the normal boiling point flows through the substance (13) accommodated in the brewing chamber (4), and the substance is extracted, with the brewing water always remaining in the liquid state, and **in that** the brewed beverage is then cooled down to a temperature below the normal boiling point before being discharged from the beverage outlet (11).

2. Method according to Claim 1, **characterized in that** the brewing water which is to be supplied to the brewing chamber (4) is heated to a temperature above 100°C, and the brewed beverage is then cooled down to a temperature below 100°C.

3. Method according to Claim 1 or 2, **characterized in that** the brewing water which is heated beyond the normal boiling point is kept under overpressure so that it remains in the liquid state.

4. Method according to one of the preceding claims, **characterized in that** the brewing water which is to be supplied to the brewing chamber (4) is heated to a temperature between 110°C and 130°C.

5. Method according to one of the preceding claims, **characterized in that** the brewed beverage is cooled down to a temperature below the normal boiling point or below 100°C in a heat exchanger (3).

6. Method according to Claim 5, **characterized in that** the as yet unheated brewing water flows through the heat exchanger (3), and the heat exchanger is cooled.

7. Apparatus for carrying out the method according to Claim 1, having a fresh-water source (1), a feed pump (2), a water heater (5), a brewing chamber (4) and a beverage outlet (11), **characterized in that** the brewing water is heated beyond the normal boiling point in the water heater (5), with means (9) for increasing the pressure of the brewing water being arranged between the water heater (5) and the beverage outlet (11) so that the brewing water heated beyond the normal boiling point remains in the liquid state, and **in that** a heat exchanger (3) for cooling the brewed beverage down to a temperature below the normal boiling point is arranged between the brewing chamber (4) and the beverage outlet (11).

8. Apparatus according to Claim 7, **characterized in that** the heat exchanger (3) has a cold-water throughflow line (18) and a hot-water throughflow line (19), with the inlet of the cold-water throughflow line (18) being connected to the fresh-water source (1), and the outlet being connected to the water heater (5).

9. Apparatus according to Claim 8, **characterized in that** the inlet of the hot-water throughflow line (19) of the heat exchanger (3) is connected to the brewing chamber (4), and the outlet is connected to the beverage outlet (11).

10. Apparatus according to one of Claims 7 to 9, **characterized in that** a steam line (7), which can be closed by means of a valve (6) and serves the purpose of removing steam, branches off between the water heater (5) and the brewing chamber (4).

11. Apparatus according to one of Claims 7 to 10, **characterized in that** a valve (14) is arranged in the brewing-water line (17).

12. Apparatus according to one of Claims 7 to 11, **characterized in that** a pressure-relief valve (9) is arranged in the beverage line (10) and is designed in such a way that the brewing water heated beyond the normal boiling point remains in the liquid state.

13. Apparatus according to one of Claims 7 to 12, **characterized in that** the heat exchanger (3) is thermally connected to the water heater (5).

## Revendications

1. Procédé de préparation de boissons chaudes, en particulier de cafés expresso, via infusion d'une substance sous forme de particule, extractible au moyen d'eau, qui est amenée à une chambre d'ébullition et y est traversée et extraite par de l'eau d'ébullition sous pression, **caractérisé en ce que** l'eau d'ébullition à amener à la chambre d'ébullition (4) est chauffée à une température supérieure au point d'ébullition normal et la substance (13) recueillie dans la chambre d'ébullition (4) est traversée et extraite par l'eau d'ébullition chauffée au-delà du point d'ébullition normal, l'eau d'ébullition gardant toujours l'état d'agrégat liquide, et **en ce que** la boisson infusée est ensuite refroidie avant la sortie hors de l'orifice de sortie de boisson à une température inférieure au point d'ébullition normal.

2. Procédé selon la revendication 1, **caractérisé en ce que** l'eau d'ébullition à amener à la chambre d'ébullition (4) est chauffée à une température supérieure à 100°C et la boisson infusée est ensuite refroidie à une température inférieure à 100°C.

3. Procédé selon la revendication 1 ou 2, **caractérisé en ce que** l'eau d'ébullition chauffée au-delà du point d'ébullition normal est maintenue sous surpression de manière à ce qu'elle garde l'état d'agrégat liquide.

4. Procédé selon l'une quelconque des revendications précédentes, **caractérisé en ce que** l'eau d'ébullition à amener à la chambre d'ébullition (4) est chauffée à une température comprise entre 110°C et 130°C.

5. Procédé selon l'une quelconque des revendications précédentes, **caractérisé en ce que** la boisson infusée est refroidie dans un échangeur thermique (3) à une température inférieure au point d'ébullition normal ou inférieure à 100°C.

6. Procédé selon la revendication 5, **caractérisé en ce que** l'échangeur thermique (3) est traversé et refroidi par de l'eau d'ébullition non encore chauffée.

7. Dispositif pour la mise en oeuvre du procédé selon la revendication 1, comportant une source d'eau douce (1), une pompe de circulation (2), un chauffe-eau (5), une chambre d'ébullition (4) ainsi qu'un orifice de sortie de boisson (11), **caractérisé en ce que** l'eau d'ébullition est chauffée dans le chauffe-eau (5) au-delà du point d'ébullition normal, des moyens (9) d'accroissement de la pression de l'eau d'ébullition étant disposés entre le chauffe-eau (5) et l'orifice de sortie de boisson (11) de manière à ce que l'eau d'ébullition chauffée au-delà du point d'ébullition normal conserve l'état d'agrégat liquide, et **en ce qu'**un échangeur thermique (3) destiné au refroidissement de la boisson infusée à une température inférieure au point d'ébullition normal est disposé entre la chambre d'ébullition (4) et l'orifice de sortie de boisson (11).

8. Dispositif selon la revendication 7, **caractérisé en ce que** l'échangeur thermique (3) présente un passage d'eau froide (18) et un passage d'eau chaude (19), l'admission du passage d'eau froide (18) étant raccordée à la source d'eau douce (1) et l'orifice de sortie étant raccordée au chauffe-eau (5).

9. Dispositif selon la revendication 8, **caractérisé en ce que** l'admission du passage d'eau chaude (19) de l'échangeur thermique (3) est raccordée à la chambre d'ébullition (4) et l'orifice de sortie étant raccordée à l'orifice de sortie de boisson (11).

10. Dispositif selon l'une quelconque des revendications 7 à 9, **caractérisé en ce qu'**une conduite de vapeur (7) destinée au prélèvement de vapeur et pouvant être fermée au moyen d'une soupape (6) dérive entre le chauffe-eau (5) et la chambre d'ébullition (4).

11. Dispositif selon l'une quelconque des revendications 7 à 10, **caractérisé en ce qu'**une soupape (14) est disposée dans la conduite d'eau d'ébullition (17).

12. Dispositif selon l'une quelconque des revendications 7 à 11, **caractérisé en ce qu'**une soupape de surpression (9) est disposée dans la conduite de boisson (10), ladite soupape de surpression étant conçue de telle manière que l'eau d'ébullition chauffée au-delà du point d'ébullition normal conserve l'état d'agrégat liquide.

13. Dispositif selon l'une quelconque des revendications 7 à 12, **caractérisé en ce que** l'échangeur thermique (3) est raccordé thermiquement au chauffe-eau (5).
